(19) Europäisches Patentamt
European Patent Office
Office européen des brevets

(11) **EP 1 711 391 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
***B62D 5/04*** *(2006.01)*     ***H02P 7/29*** *(2006.01)*
***H02P 8/18*** *(2006.01)*

(21) Anmeldenummer: **04816335.6**

(22) Anmeldetag: **01.12.2004**

(86) Internationale Anmeldenummer:
**PCT/EP2004/053194**

(87) Internationale Veröffentlichungsnummer:
**WO 2005/070746 (04.08.2005 Gazette 2005/31)**

(54) **VERFAHREN UND VORRICHTUNG ZUM BESTIMMEN EINES ZEITLICHEN MITTELWERTES EINES PULSBREITENMODULIERTEN STROMS EINES ELEKTROMOTORS**

METHOD AND DEVICE FOR DETERMINING A TIME AVERAGE OF A PULSE WIDTH-MODULATED CURRENT OF AN ELECTRIC MOTOR

PROCEDE ET DISPOSITIF POUR DETERMINER UNE VALEUR MOYENNE TEMPORELLE D'UN COURANT A MODULATION D'IMPULSIONS EN LARGEUR D'UN MOTEUR ELECTRIQUE

(84) Benannte Vertragsstaaten:
**DE FR GB IT SE**

(30) Priorität: **27.01.2004 DE 102004003973**

(43) Veröffentlichungstag der Anmeldung:
**18.10.2006 Patentblatt 2006/42**

(73) Patentinhaber: **ROBERT BOSCH GMBH**
**70442 Stuttgart (DE)**

(72) Erfinder:
• **BORST, Holger**
**77830 Buehlertal (DE)**
• **ADRIANI, Alfred**
**77815 Buehl (DE)**

(56) Entgegenhaltungen:
• **PATENT ABSTRACTS OF JAPAN Bd. 2003, Nr. 11, 5. November 2003 (2003-11-05) -& JP 2003 219690 A (MEIDENSHA CORP), 31. Juli 2003 (2003-07-31)**
• **PATENT ABSTRACTS OF JAPAN Bd. 2003, Nr. 09, 3. September 2003 (2003-09-03) -& JP 2003 137109 A (HONDA MOTOR CO LTD; HONDA ELESYS CO LTD), 14. Mai 2003 (2003-05-14)**
• **PATENT ABSTRACTS OF JAPAN Bd. 015, Nr. 365 (E-1111), 13. September 1991 (1991-09-13) -& JP 03 143294 A (OMRON CORP), 18. Juni 1991 (1991-06-18)**

**Beschreibung**

Die vorliegende Erfindung bezieht sich auf ein Verfahren und eine Vorrichtung zur Bestimmung eines zeitlichen Mittelwertes eines pulsbreitenmodulierten Stroms eines Elektromotors in einem Kraftfahrzeug, insbesondere bei niedrigen Pulsbreitenmodulations-Frequenzen.

Üblicherweise beträgt bei einer Steuerung eines Elektromotors mittels Pulsbreitenmodulation (PWM; PWM = puls width modulation) die Frequenz des PWM-Signals mehrere 100 bis viele 1.000 Hz. Aufgrund der Induktivität der Motorspulen stellt sich dabei ein Gleichstrom ein, der mehr oder weniger stark von einem Rechteck-Signal überlagert ist. Der Strom durch den Elektromotor wird häufig indirekt über eine an einem Shunt-Widerstand, der in einer der Zuleitungen des Motors liegt, abfallenden Spannung gemessen. Die aufgrund der hohen PWM-Frequenz ebenfalls hochfrequenten Wechselspannungsanteile der Spannung an dem Shunt-Widerstand können ohne weiteres mit einem Tiefpass, beispielsweise einem RC-Tiefpass, herausgefiltert werden. Man erhält eine reine Gleichspannung, die einen arithmetischen Mittelwert des fließenden Stroms abbildet.

Aus der JP 2003219690 A sowie der JP 03-143294 ist diesbezüglich jeweils ein Verfahren zum Bestimmen eines zeitlichen Mittelwertes eines pulsbreitenmodulierten Stromes eines Elektromotors mit folgenden Schritten bekannt:

- Erfassen mehrere Messwerte einer Messgröße, die In einem bekannten Zusammenhang mit dem momentanen Strom durch den Elektromotor steht, zu mehreren Zeitpunkten innerhalb einer Periode der Pulsbreitenmodulation,
- Berechnen eines zeitlichen Mittelwertes des Stromes aus den Messwerten.

Bei neuen Anwendungen für PWM-gesteuerte elektrische Stellmotoren werden nun erstmals auch ungewöhnlich niedrige Frequenzen von PWM-Signalen unterhalb von 100 Hz verwendet. Ein wichtiges Beispiel ist ein elektrischer Stellmotor, der in einem Kraftfahrzeug eine Kupplung betätigt (öffnet und schließt), die ein Differenzial- bzw. Ausgleichsgetriebe im Antriebsstrang des Kraftfahrzeugs sperrt, um ein Durchdrehen einzelner Antriebsräder zu verhindern. Hier wird aus verschiedenen Gründen ein niederfrequentes PWM-Signal verwendet. Dieses hat entsprechende niederfrequente und eine große Amplitude aufweisende Oszillationen des Antriebsstroms und des Antriebsdrehmoments des Elektromotors zur Folge. Diese Drehmoment-Spitzen bzw. -Schläge bewirken eine zuverlässige Überwindung von Haftreibung, womit auch im Falle einer schwergängigen Stellmechanik oder einer Veränderung der mechanischen Eigenschaften der Stellmechanik innerhalb ihrer Lebensdauer eine zuverlässige Betätigung der Kupplung sichergestellt ist.

Bei einer niederfrequenten PWM-Steuerung eines Elektromotors ist die Bestimmung des zeitlichen Mittelwerts des pulsbreitenmodulierten Stroms auf die oben beschriebene herkömmliche Weise jedoch nicht möglich. Ein Grund ist, dass sich aufgrund der zu geringen Induktivität der Motorspulen bei sehr niedrigen PWM-Frequenzen kein Gleichstrom einstellt. Besonders bei kleinen Tastverhältnissen der Pulsbreitenmodulation hat der Strom extrem hohe Wechselstromanteile. Um diese mittels eines Tiefpassfilters zu entfernen, wäre ein Tiefpassfilter mit einer sehr hohen Zeitkonstante erforderlich, beispielsweise ein RC-Tiefpass mit einem sehr großen und teuren Kondensator. Darüber hinaus verschlechtert eine hohe Zeitkonstante des Tiefpassfilters die Dynamik des Messsystems entsprechend. Anders ausgedrückt besteht ein Problem bei einer niederfrequenten Pulsbreitenmodulation darin, dass die erforderliche Zeitkonstante des Tiefpassfilters gemessen an der Zeitskala auf der der Elektromotor bzw. Antriebsstrom geregelt wird, nicht mehr vernachlässigbar klein ist.

Die Aufgabe der vorliegenden Erfindung besteht darin, ein Verfahren und eine Vorrichtung zum Bestimmen eines zeitlichen Mittelwertes eines pulsbreitenmodulierten Stroms eines Elektromotors in einem Kraftfahrzeug sowie zum Steuern eines Elektromotors in einem Kraftfahrzeug zu schaffen, die auch für eine niederfrequente Pulsbreitemodulation geeignet ist.

Diese Aufgabe wird durch das Verfahren gemäß des unabhängigen Anspruchs gelöst.

Bevorzugte Weiterbildungen sind in den abhängigen Ansprüchen definiert.

Die vorliegende Erfindung schafft ein Verfahren zum Bestimmen eines zeitlichen Mittelwerts eines pulsbreitenmodulierten Stroms eines Elektromotors in einem Kraftfahrzeug, mit einer PWM-Frequenz unterhalb von 100 Hz, mit folgenden Schritten:

a) Erfassen mehrerer Messwerte einer Messgröße, die in einem bekannten Zusammenhang mit dem momentanen Strom durch den Elektromotor steht, zu mehreren Zeitpunkten innerhalb einer Periode der Pulsbreitenmodulation;

b) Berechnen eines zeitlichen Mittelwerts des Stromes aus den Messwerten;

c) Bestimmen, ob die PWM-Frequenz verändert wurde; und

d) Berechnen der Anzahl der Zeitpunkte innerhalb einer Periode, zu denen die Messgröße erfasst wird, aus der neuen PWM-Frequenz und einer Abtastfrequenz, mit der die Messgröße im Schritt a) erfasst wird, nachdem die neue PWM-Frequenz aktiviert wurde.

Der vorliegenden Erfindung liegt die Idee zugrunde, innerhalb einer PWM-Periode zu mehreren Zeitpunkten den jeweils momentanen Strom direkt oder indirekt zu erfassen und daraus den zeitlichen Mittelwert zu berechnen.

Ein Vorteil der vorliegenden Erfindung liegt darin, dass der zeitlichen Mittelwert des Stroms innerhalb jeder Periode der Pulsbreitenmodulation neu bestimmt wird, und dass dieser zeitliche Mittelwert sich jeweils nur auf die zurückliegende Periode bezieht. Die Trägheit der Bestimmung des zeitlichen Mittelwerts oder anders ausgedrückt die Länge des Zeitintervalls, innerhalb dessen Strom-Messwerte Einfluss auf den zeitlichen Mittelwert haben, ist somit minimal.

Gemäß einem bevorzugten Ausführungsbeispiel wird die vorliegende Erfindung bei einem elektrischen Stellmotor für eine ein Ausgleichsgetriebe sperrende mechanische Kupplung in einem Kraftfahrzeug verwendet. Eine feine Dosierung der Sperrwirkung der Kupplung erfordert hier eine exakte Steuerung des elektrischen Stellmotors, die wiederum empfindlich von einer genauen und hochdynamischen Erfassung des zeitlichen Mittelwertes des Stroms abhängt Die vorliegende Erfindung gewährleistet diese genaue und hochdynamische Erfassung des zeitlichen Mittelwerts auch bei ungewöhnlich niedrigen PWM-Frequenzen unterhalb von 100 Hz.

Gemäß einem bevorzugten Ausführungsbeispiel der vorliegenden Erfindung wird, wenn sich die PWM-Steuerung in einem Ruhezustand befindet, in den sie keinen Strom durch den Elektromotor treibt, ein Messwert der Messgröße erfasst, als Offset-Messwert gespeichert und zur Korrektur des zeitlichen Mittelwerts des Stroms verwendet. Diese Offset-Korrektur ist am Antriebsstrang eines Kraftfahrzeugs besonders wichtig und vorteilhaft, da dort abhängig vom Einsatzort des Kraftfahrzeugs, von der Sonneneinstrahlung und anderen klimatischen Bedingungen, der Abwärme des Motors, der in der Kupplung umgesetzten Energie und anderen Einflüssen extreme und rasch wechselnde Bedingungen herrschen, die eine ausgeprägte Drift der Parameter der erfindungsgemäßen Stromerfassungsschaltung bzw. der am erfindungsgemäßen Verfahren beteiligten Komponenten bedingen.

Die erfindungsgemäße Bestimmung des zeitlichen Mittelwertes ist im Zusammenspiel mit der beschriebenen Offset-Korrektur besonders vorteilhaft, da auch kurze und kürzeste Ruhezustände der PWM-Steuerung, in denen der elektrische Stellmotor nicht angetrieben wird, für die Offset-Korrektur verwendet werden können, ohne dass vorher während einer Zeitdauer gewartet werden muss, die mehreren Zeitkonstanten eines analogen RC-Tiefpassfilters entspricht. Im fahrdynamischen Grenzbereich, in dem die Sperrwirkung der Kupplung ständig verändert und an die durch die einzelnen Antriebsräder auf den befahrenen Untergrund übertragbare Kraft angepasst werden muss, ruht der Stellmotor in der Kupplung, wenn überhaupt, dann nur kurz. Gleichzeitig werden unter diesen Bedingungen jedoch große Beträge mechanischer Leistung in der Kupplung in Wärmeleistung umgesetzt, was eine rasche Temperaturänderung auch am Stellmotor und der heutzutage üblicherweise mit diesem integrierten Steuerung und eine entsprechend rasche Drift, insbesondere der Strommessung zur Folge hat.

Gemäß einem weiteren bevorzugten Ausführungsbeispiel der vorliegenden Erfindung wird regelmäßig bestimmt, ob eine PWM-Frequenz verändert wurde, wobei die Schritte der erfindungsgemäßen Bestimmung des zeitlichen Mittelwerts abgebrochen und erneut ausgeführt werden, wenn die PWM-Frequenz geändert wurde. Die zuletzt beschriebene ständige Anpassung der Sperrwirkung der Kupplung bedingt, dass der Stellmotor ständig und in quasi - zufälliger Weise - anläuft, stoppt, die Laufrichtung umkehrt, die Drehzahl oder das abgegebene Drehmoment wechselt. Für jeden dieser einzelnen Vorgänge (Anlaufen, Stoppen, Drehzahl-, Drehmoment- oder Richtungswechsel) können andere Parameter der Pulsbreitenmodulation, insbesondere eine andere Frequenz, optimal sein. Die Steuerung dieser optimalen PWM-Frequenz vereinfacht sich, wenn die PWM-Frequenz zu jedem beliebigen Zeitpunkt geändert werden kann. Dies wird gemäß der vorliegenden Erfindung dadurch gewährleistet, dass die Mittelwertbildung abgebrochen und neu begonnen wird, sobald die PWM-Frequenz geändert wurde.

Aus den gleichen Gründen ist es vorteilhaft und bevorzugt, dass bei jeder Änderung der PWM-Frequenz auch die Anzahl der Zeitpunkte innerhalb einer Periode, zu denen die Messgröße erfasst wird, aus der PWM-Frequenz und einer Abtastfrequenz mit der die Messgröße erfasst wird, neu berechnet wird.

Nachfolgend werden bevorzugte Ausführungsbeispiele der vorliegenden Erfindung mit Bezug auf die beiliegenden Figuren näher erläutert. Es zeigen:

Figur 1    eine schematische Darstellung einer Stromerfassungsschaltung gemäße einem bevorzugten Ausführungsbeispiel der vorliegenden Erfin- dung;

Figur 2    ein schematisches Flussdiagramm eines Verfah- rens gemäß einem ersten Ausführungsbeispiel der vorliegenden Erfindung;

Figur 3    ein schematisches Flussdiagramm einer Offset- aktualisierungsroutine eines Verfahrens gemäß einem bevorzugten Ausführungsbeispiel der vorliegenden Erfindung;

Figur 4    ein schematisches Flussdiagramm einer Rück- setzroutine eines Verfahrens gemäß einer be- vorzugten Ausführungsbeispiel der vorliegen- den Erfindung; und

Figur 5    ein schematisches Flussdiagramm einer Anzahl- berechnungsroutine eines Verfahrens gemäß ei- ner bevorzugten Ausführungsbeispiel der vor- liegenden Erfindung.

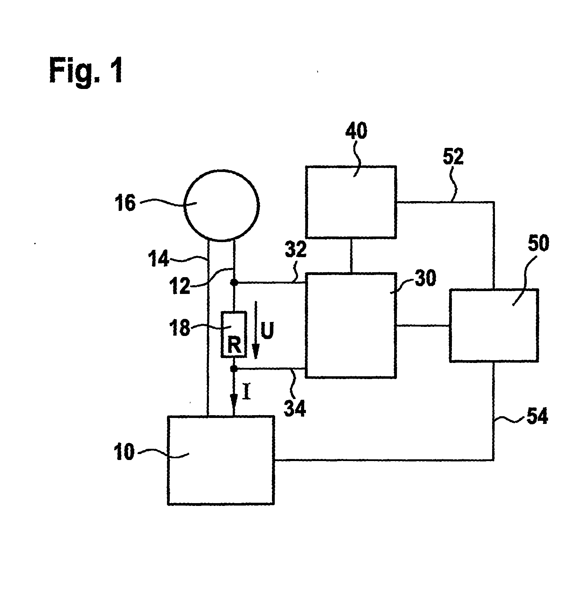

Figur 1 ist eine schematische Darstellung einer PWM-Steuerung 10, die über eine erste Leitung 12 und eine zweite Leitung 14 einen Elektromotor 16 mit pulsbreitenmodulierter elektrischer Leistung versorgt. In der ersten Leitung 12 ist ein Shunt bzw. Messwiderstand 18 mit dem ohmschen Widerstand R angeordnet, an dem eine Spannung U abfällt, die proportional zum momentan durch den Messwiderstand 18 und den Motor 16 fließenden Strom I ist, U = R · I.

Ein Spannungssensor 30 tastet über eine dritte Leitung 32 und eine vierte Leitung 34 die Spannung U an dem Messwiderstand 18 ab. Der Sensor 30 ist mit einer Messsteuerung 40 verbunden, welche die Zeitpunkte steuert, zu denen der Sensor 30 die Spannung U an dem Messwiderstand 18 erfasst und jeweils einen entsprechenden Messwert an eine Berechnungseinrichtung 50 ausgibt. Die Berechnungseinrichtung 50 berechnet aus den von dem Sensor empfangenen Messwerten einen zeitlichen Mittelwert des Stroms I, der durch den Motor 16 und den Messwiderstand 18 fließt. Über eine Verbindungsleitung 52 erhält die Berechnungseinrichtung 50 von der Messsteuerung 40 ein Signal, das die Anzahl der aufzusummierenden Messwerte darstellt. Gemäß einer bevorzugten Variante der vorliegenden Erfindung erhält die Berechnungseinrichtung 50 von der Messsteuerung 40 ferner ein Signal, das ein Rücksetzen der Berechnung des zeitlichen Mittelwerts steuert.

Anstelle des ohmschen Messwiderstandes 18 kann ein beliebiges anderes elektrisches Bauelement in die erste Leitung 12 geschaltet oder an der ersten Leitung 12 oder den Leitungen 12, 14 angeordnet sein, über das direkt oder indirekt der Strom I durch den Motor 16 erfassbar ist. Dieses Bauelement weist vorzugsweise einen eindeutigen linearen oder nicht-linearen Zusammenhang zwischen einer an dem Bauelement erfassbaren Messgröße und dem Strom I auf und kann anders als in Figur 1 dargestellt auch mit dem Sensor 30 integriert sein. Alternativ wird eine beliebige andere Messgröße verwendet, die in einem bekannten Zusammenhang mit dem Strom durch den Motor 16 steht.

Die PWM-Steuerung 10 erhält über eine Rückkopplungsleitung 54 von der Berechnungseinrichtung 50 ein analoges oder vorzugsweise ein digitales Signal, das den zeitlichen Mittelwert des pulsbreitenmodulierten Stroms I darstellt. Die PWM-Steuerung 10 steuert die Pulsbreitemodulation, insbesondere die Pulsbreite des einzelnen Pulses abhängig von dem zeitlichen Mittelwert des pulsbreitenmodulierten Stroms und vorzugsweise abhängig von weiteren Parametern, um beispielsweise die Drehzahl, die aufgenommene oder abgegebene Leistung oder das abgegebene Drehmoment des Elektromotors 16 auf einen entsprechenden Sollwert zu regeln.

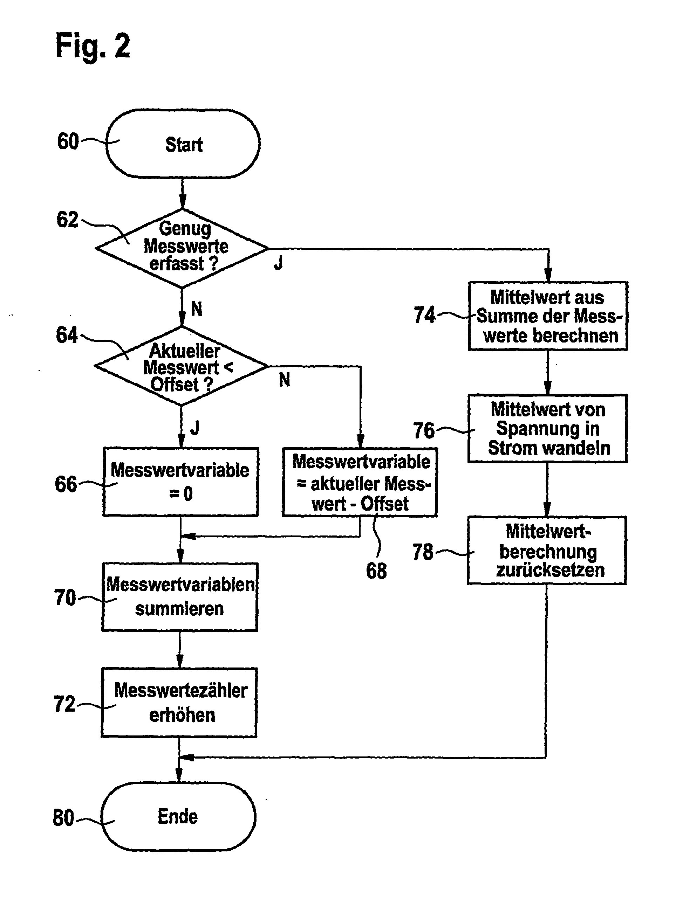

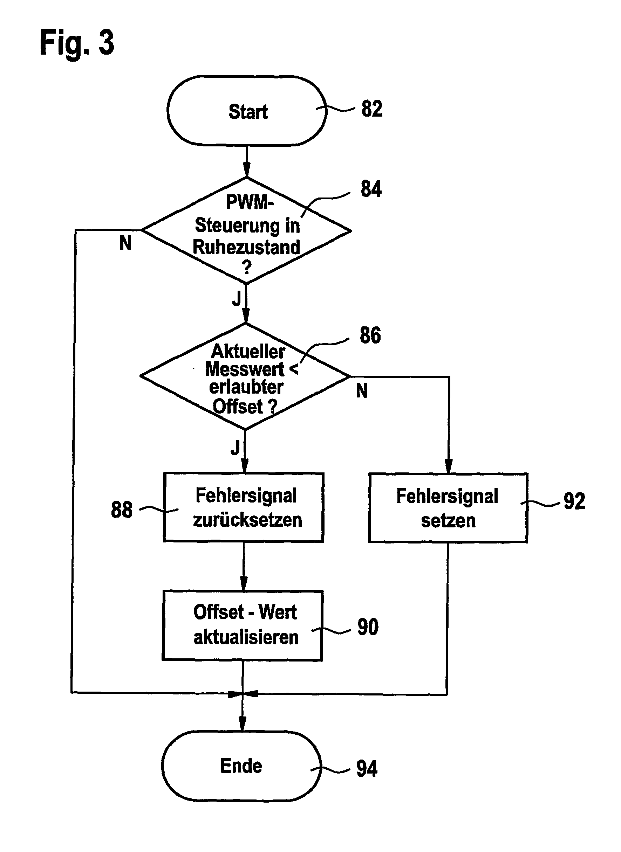

Der Spannungssensor 30, die Messsteuerung 40 und die Berechnungseinrichtung 50 sind vorzugsweise so aufgebaut, dass sie das nachfolgend anhand der Figuren 2 bis 5 dargestellte Verfahren zum Bestimmen des zeitlichen Mittelwerts ausführen. Die anhand der Figur 2 dargestellte Routine wird vorzugsweise periodisch wiederholt. Optional werden eine oder mehrere der anhand der Figuren 3 bis 5 dargestellten Routinen mit der gleichen oder einer längeren Periodizität ebenfalls wiederholt.

Figur 2 ist ein schematisches Flussdiagramm, das die zentrale Routine zur Messwerterfassung in einem Verfahren gemäß einem bevorzugten Ausführungsbeispiel der vorliegenden Erfindung darstellt. Nach dem Start 60 wird zunächst in einem Schritt 62 geprüft, ob bereits genug Messwerte für eine Mittelwertbildung erfasst sind, indem der Zählerstand eines Messwertezählers ausgelesen und mit einer Soll-Anzahl verglichen wird. Wenn noch nicht genug Messwerte erfasst sind, wird in einem Schritt 64 geprüft, ob der aktuelle Messwert kleiner als ein Offset ist. Ist dies der Fall, so wird in einem Schritt 66 eine Messwertvariable zu 0 gesetzt. Wenn der aktuelle Messwert nicht kleiner als der Offset ist, wird in einem Schritt 68 die Messwertvariable auf die Differenz des aktuellen Messwerts und des Offsets gesetzt. Nachdem die Messwertvariable im Schritt 66 zu 0 gesetzt oder im Schritt 68 auf die Differenz gesetzt ist, wird sie in einem Schritt 70 zu einer im Folgenden als Messwertsumme bezeichneten Summe von Messwertvariablen addiert, und der Messwertezähler wird in einem Schritt 72 erhöht.

Wenn im Schritt 62 festgestellt wurde, dass bereits genug Messwerte erfasst wurden, wird in einem Schritt 74 aus der Messwertesumme ein Mittelwert berechnet. Dieser Mittelwert ist zunächst ein Mittelwert der Messwertvariable. Er stellt im Fall der oben anhand der Figur 1 dargestellten Vorrichtung einen Mittelwert der Spannungen an dem Messwiderstand 18 dar. Dieser Spannungs-Mittelwert wird anschließend in einem Schritt 76 mittels des ohmschen Gesetztes I = U/R in einen Strom-Mittelwert gewandelt. Die Ausgabe des zeitlichen Mittelwerts des Stroms erfolgt dann beispielsweise in Vielfachen von 100 mA oder in einem beliebigen anderen digitalen oder analogen Format. Schließlich wird die Mittelwertsberechnung in einem Schritt 78 zurückgesetzt, wobei insbesondere der Messwertezähler auf einen Ausgangswert, vorzugsweise 0 zurückgesetzt und die Messwertesumme auf 0 gesetzt werden.

Nach dem Rücksetzen 78 oder dem Erhöhen 72 des Messwertezählers in Schritt 78 oder 72 endet die Routine zur Messwerterfassung in einem Schritt 80.

Allgemein ausgedrückt wird bei jedem Durchlaufen der in Figur 2 dargestellten Routine zur Messwerterfassung eine Messwertesumme um einen aktuellen Messwert erhöht, wenn noch nicht genug Messwerte erfasst wurden. Wenn genug Messwerte erfasst wurden, werden aus der Messwertesumme ein Mittelwert berechnet und aus diesem ein Strom-Mittelwert erzeugt. Vorzugsweise wird die in Figur 2 dargestellte Routine zur Messwerterfassung periodisch wiederholt, wobei die Frequenz der Wiederholung eine Abtastfrequenz bezüglich der Erfassung der einzelnen Messwerte darstellt.

Die Prüfung, ob der aktuelle Messwert kleiner als ein Offset ist, im Schritt 64 und das Nullsetzen der Messwertvariable im Schritt 66 bewirken, dass die Messwertvariable keine negativen Werte aufnehmen muss. Sie kann deshalb als vorzeichenlose Variable implementiert werden. Sofern die Messwertvariable als vorzeichenbehaftete Variable implementiert ist, kann auf die Schritte 64, 66 verzichtet werden, so dass die Messwertvariable immer auf die Differenz des aktuellen Messwerts und des Offsets (Schritt 68) gesetzt wird.

Sofern keine Offset-Korrektur erforderlich ist, kann die Messwertvariable im Schritt 68 auf den aktuellen Messwert gesetzt werden.

Figur 3 stellt eine Routine zur Offsetaktualisierung dar, mittels derer der Offset-Wert aktualisiert wird. Nach dem Start 82 wird in einem Schritt 84 geprüft, ob die PWM-Steuerung sich in einem Ruhezustand befindet. Alle folgenden Schritte werden nur ausgeführt, wenn dies der Fall ist. In einem Schritt 86 wird geprüft, ob ein aktueller Messwert innerhalb eines vorbestimmten Intervalls liegt, insbesondere kleiner als ein erlaubter bzw. maximaler Offset ist. Ist dies der Fall, so werden in einem Schritt 88 ein Fehlersignal bzw. ein Fehler-Flag zurückgesetzt und in einem Schritt 90 der Offset-Wert durch den aktuellen Messwert aktualisiert. Wenn der aktuelle Messwert nicht innerhalb des vorbestimmten Intervalls liegt und insbesondere größer als der erlaubte Offset ist, wird in einem Schritt 92 das Fehlersignal gesetzt. Der zuletzt bestimmte Offset wird dann beibehalten. Nach dem Setzen des Fehlersignals im Schritt 92 oder dem Rücksetzen des Fehlersignals im Schritt 88 und dem Aktualisieren des Offset-Werts im Schritt 90 bzw. wenn die PWM-Steuerung sich nicht im Ruhezustand befindet endet die Routine zur Offsetaktualisierung in einem Schritt 94.

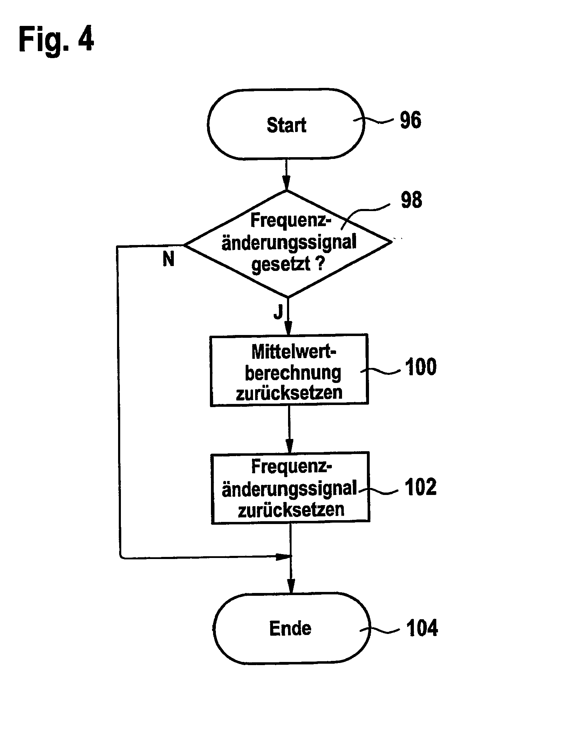

Figur 4 stellt in einem schematischen Flussdiagramm eine Routine zum Rücksetzen der Mittelwertberechnung dar, in der das erfindungsgemäße Verfahren auf eine Änderung der Frequenz der Pulsbreitenmodulation reagiert. Nach einem Start 96 wird in einem Schritt 98 geprüft, ob ein Signal bzw. ein Merker bzw. ein Flag zur Anzeige einer Frequenzänderung gesetzt ist. Ist dies der Fall, so wird die Mittelwertberechnung in einem Schritt 100 ähnlich dem Schritt 78 aus Figur 2 zurückgesetzt, und das Signal zur Anzeige einer Frequenzänderung wird in einem Schritt 102 zurückgesetzt. Danach endet die Rücksetzroutine in einem Schritt 104. Wenn im Schritt 98 festgestellt wurde, dass das Signal zur Anzeige einer Frequenzänderung nicht gesetzt ist, endet die Rücksetzroutine ohne dass die Mittelwertberechnung und das Signal zur Anzeige einer Frequenzänderung in den Schritte zurückgesetzt 100, 102 werden.

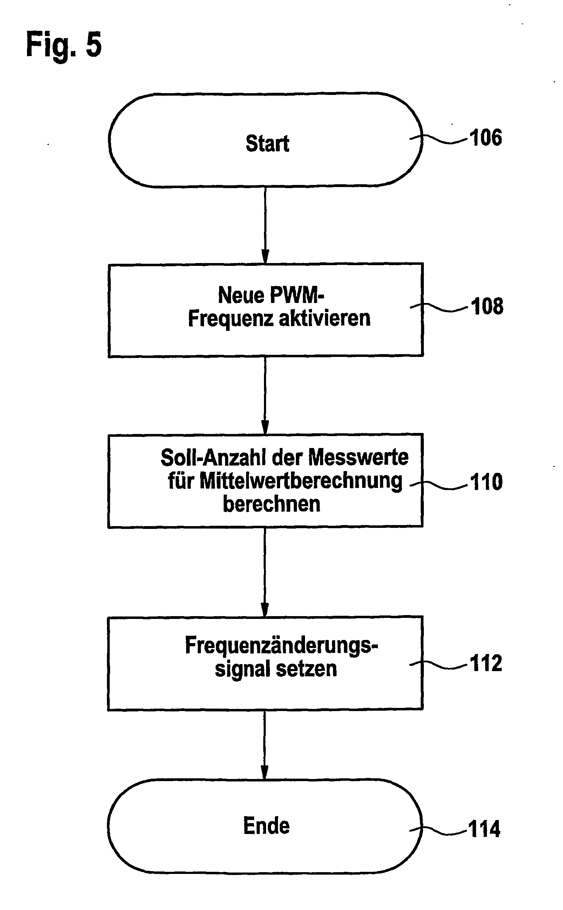

In Figur 5 ist in einem schematischen Flussdiagramm eine Routine dargestellt, in der die Soll-Anzahl der Messwerte berechnet wird, die im Schritt 62 aus Figur 2 verwendet wird, um zu bestimmen, ob genug Messwerte erfasst wurden. Nach einem Start 106 wird in einem Schritt 108 eine neue PWM-Frequenz aktiviert. In einem Schritt 110 wird die Soll-Anzahl der Messwerte für die oben anhand der Figur 2 dargestellte Mittelwertberechnung berechnet. Wenn die in Figur 2 dargestellte Routine zur Messwerterfassung mit einer festen Periode aufgerufen wird oder anders ausgedrückt jeweils aktuelle Messwerte zu periodischen Zeitpunkten erfasst werden, wird die Soll-Anzahl $n_{soll}$ vorzugsweise als Quotient aus der Periodendauer $T_{PWM}$ der Pulsbreitenmodulation und

der Periodendauer $T_{sample}$ der Messwerterfassung bestimmt,

$$n_{soll} = \frac{T_{PWM}}{T_{sample}} = \frac{f_{sample}}{f_{PWM}},$$

wobei $f_{sample} = 1/T_{sample}$ die Frequenz der Messwerterfassung und $f_{PWM} = 1/T_{PMM}$ die PWM-Frequenz sind. Schließlich wird das Signal zur Anzeige einer Frequenzänderung gesetzt 112, das in der in Figur 4 dargestellten Routine im Schritt 98 abgefragt und im Schritt 102 zurückgesetzt wird. Danach endet die Routine zur Berechnung der Soll-Anzahl in einem Schritt 114.

Wenn die PWM-Frequenz $f_{PMM}$ beispielsweise 20 Hz beträgt und die oben anhand der Figur 2 dargestellte Routine zur Messwerterfassung alle 100 μs aufgerufen wird (d. h. $f_{sample}$ = 10 kHz), wird in der anhand der Figur 5 dargestellten Routine zur Berechnung der Soll-Anzahl die Soll-Anzahl $n_{soll}$ = 10 kHz/20 Hz = 500 bestimmt.

Die anhand der Figur 5 dargestellte Routine zur Berechnung der Soll-Anzahl ist ohne weiteres so modifizierbar, dass die Aktivierung der neuen PWM-Frequenz außerhalb der Routine stattfindet und im Schritt 108 beispielsweise lediglich die neue PWM-Frequenz übernommen wird.

Die anhand der Figuren 3 dargestellte Routine zur Offsetaktualisierung und die anhand der Figur 4 dargestellte Routine zum Rücksetzen der Mittelwertberechnung werden vorzugsweise periodisch aufgerufen bzw. ausgeführt. Besonders bevorzugt werden sie einmal innerhalb jeder Periode der Pulsbreitenmodulation oder aber einmal innerhalb jeder Periode der Messwerterfassung und damit genauso oft wie die anhand der Figur 2 dargestellte Routine zur Messwerterfassung aufgerufen. Die anhand der Figur 5 dargestellte Routine zur Berechnung der Soll-Anzahl wird vorzugsweise nur und genau dann aufgerufen, wenn eine neue PWM-Frequenz zu aktivieren ist. In diesem Fall erfolgt die Ausführung der in Figur 4 dargestellten Routine zum Rücksetzen der Mittelwertbildung vorteilhaft unmittelbar nach der in Figur 5 dargestellten Routine zur Berechnung der Soll-Anzahl. In der oben erwähnten Variante, in der eine neue PWM-Frequenz lediglich übernommen wird, kann sie auch am Beginn oder am Ende jeder PWM-Periode oder vorzugsweise immer dann aufgerufen werden, wenn in der in Fig. 2 dargestellten Routine zur Messwerterfassung die Mittelwertberechnung im Schritt 78 zurückgesetzt wurde. Ein Aufrufen der Routine zur Offsetaktualisierung und der Routine zum Rücksetzen der Mittelwertbildung innerhalb jeder Periode der Messwerterfassung ist sinnvoll, wenn ein Übergang der PWM-Steuerung in den Ruhezustand bzw. einer Änderung der PWM-Frequenz jederzeit möglich ist. Wenn ein Übergang der PWM-Steuerung in den Ruhezustand oder eine Änderung der PWM-Frequenz nur zu vorgegebenen Zeitpunkten möglich ist, beispielsweise nur einmal in jeder Periode der Pulsbreitenmodulation, ist auch ein Aufrufen bzw. Ausführen der entsprechenden Routine nur zu bzw. unmittelbar nach diesem Zeitpunkt sinnvoll.

Die anhand der Figuren 2 bis 5 dargestellten Routinen werden vorzugsweise von einem einzigen Prozessor ausgeführt. Alternativ werden sie von mehreren verschiedenen Prozessoren bzw. Rechenwerken ausgeführt, die miteinander synchronisiert sein können, jedoch nicht müssen. Dabei ist die Reihenfolge einzelner Schritte, beispielsweise die der Schritte 70 und 72 aus Figur 2 oder der Schritte 88 und 90 aus Figur 3 oder der Schritte 100 und 102 aus Figur 4 oder der Schritte 108, 110, 112 aus Figur 5 ohne weiteres vertauschbar ohne die Funktionalität des Verfahrens einzuschränken.

Je höher die Abtastfrequenz $f_{sample}$ ist, desto genauer wird der Zeitverlauf der Messgröße erfasst und bei umso kleineren Tastverhältnissen deren Pulsbreitenmodulation ist insbesondere eine korrekte Berechnung des zeitlichen Mittelwertes möglich.

**Patentansprüche**

1. Verfahren zum Bestimmen eines zeitlichen Mittelwerts eines pulsbreitenmodulierten Stroms eines Elektromotors (18) in einem Kraftfahrzeug, mit einer PWM-Frequenz ($f_{PMM}$) unterhalb von 100 Hz, mit folgenden Schritten:

   a) Erfassen (64) mehrerer Messwerte einer Messgröße, die in einem bekannten Zusammenhang mit dem momentanen Strom durch den Elektromotor (16) steht, zu mehreren Zeitpunkten innerhalb einer Periode der Pulsbreitenmodulation;
   b) Berechnen (74, 76) eines zeitlichen Mittelwerts des Stromes aus den Messwerten;
   c) Bestimmen (98), ob die PWM-Frequenz verändert wurde; und
   d) Berechnen (110) der Anzahl der Zeitpunkte innerhalb einer Periode, zu denen die Messgröße erfasst wird, aus der neuen PWM-Frequenz und einer Abtastfrequenz ($f_{sample}$), mit der die Messgröße im Schritt a) erfasst wird, nachdem die neue PWM-Frequenz aktiviert wurde (108).

2. Verfahren nach Anspruch 1, bei dem der Elektromotor (16) ein Stellmotor einer mechanischen Kupplung ist.

3. Verfahren nach einem der vorhergehenden Ansprüche, bei dem der pulsbreitenmodulierte Strom durch eine Steuerung (10) zum Steuern der Pulsbreitenmodulation gesteuert wird, ferner mit folgenden Schritten:

   o1) Erfassen (86) eines Messwertes der Messgröße, wenn sich die Steuerung (10) in einem Ruhezustand befindet (84), in dem sie keinen Strom durch den Elektromotor (16) treibt;
   o2) Speichern (90) des Messwerts als Offset-Messwert für den Strom; und
   o3) Verwenden des Offset-Messweris zur Korrektur des zeitlichen Mittelwerts des Stromes.

4. Verfahren nach Anspruch 3, bei dem der Messwert nur verwendet wird, wenn der Messwert innerhalb eines vorbestimmten Intervalls liegt (86).

5. Verfahren nach einem der vorhergehenden Absprüche, bei dem als Messgröße eine Spannung an einem von dem Strom durchflossenen Messwiderstand (18) erfasst wird.

6. Verfahren nach einem der vorhergehenden Ansprüche, bei dem die Zeitpunkte innerhalb einer Periode der Pulsbreitenmodulation gleichmäßig verteilt sind.

**Claims**

1. Method for determining a temporal average value of a pulse-width-modulated current of an electric motor (16) in a motor vehicle, with a PWM frequency ($f_{PMM}$) below 100 Hz, comprising the following steps:

   a) detecting (64) a plurality of measurement values of a measurement variable, which has a known relationship with the instantaneous current through the electric motor (16), at a plurality of time points within a period of the pulse-width modulation,
   b) calculating (74, 76) a temporal average value of the current from the measurement values;
   c) determining (98) whether the PWM frequency has been changed; and
   d) calculating (110) the number of time points within a period, at which time points the measurement variable is detected, from the new PWM frequency and a sampling frequency ($f_{sample}$) with which the measurement variable is detected in step a), after the new PWM frequency has been activated (108).

2. Method according to Claim 1, in which the electric motor (16) is an actuating motor of a mechanical clutch.

3. Method according to either of the preceding claims, in which the pulse-width-modulated current is controlled by a controller (10) for controlling the pulse-width modulation, further comprising the following steps:

o1) detecting (86) a measurement value of the measurement variable when the controller (10) is in an inoperative state (84) in which it does not drive any current through the electric motor (16);

o2) storing (90) the measurement value as an offset measurement value for the current; and

o3) using the offset measurement value for correcting the temporal average value of the current.

4. Method according to Claim 3, in which the measurement value is used only when the measurement value is within a predetermined interval (86).

5. Method according to one of the preceding claims, in which a voltage across a measurement resistor (18) through which the current flows is detected as the measurement variable.

6. Method according to one of the preceding claims, in which the time points are uniformly distributed within a period of the pulse-width modulation.

**Revendications**

1. Procédé de détermination d'une valeur moyenne temporelle d'un courant en impulsions de largeur modulée d'un moteur électrique (16) de véhicule automobile, la fréquence des pulsations à largeur modulée ($f_{PMM}$) étant inférieure à 100 Hz, le procédé comportant les étapes suivantes :

a) détecter (64) plusieurs valeurs de mesure d'une grandeur de mesure qui présente une relation connue avec le courant instantané qui traverse le moteur électrique (16) et ce en plusieurs instants au cours d'une période de modulation de la largeur des impulsions,

b) calculer (74, 76) la valeur de la moyenne temporelle du courant à partir des valeurs de mesure,

c) déterminer (98) si la fréquence PWM a été modifiée et

d) au cours d'une période pendant laquelle la grandeur de mesure a été détectée, calculer (110) le nombre des instants à partir de la nouvelle fréquence PWM et d'une fréquence d'échantillonnage ($f_{sample}$) à laquelle la grandeur de mesure a été détectée à l'étape a) après que la nouvelle fréquence PWM a été activée (108).

2. Procédé selon la revendication 1, dans lequel le moteur électrique (16) est un moteur pas-à-pas d'un embrayage mécanique.

3. Procédé selon l'une des revendications précédentes, dans lequel le courant en impulsions de largeur modulée est commandé par une commande (10) qui commande la modulation de la largeur des impulsions, et présentant en outre les étapes suivantes :

o1) détecter (86) une valeur de mesure de la grandeur de mesure lorsque la commande (10) se trouve (84) dans un état de repos au cours duquel elle n'injecte aucun courant dans le moteur électrique (16),

o2) conserver (90) en mémoire la valeur de mesure comme valeur de mesure de décalage du courant et

o3) utilisation de la valeur de mesure de décalage pour corriger la valeur moyenne temporelle du courant.

4. Procédé selon la revendication 3, dans lequel la valeur de mesure est située (86) à l'intérieur d'un intervalle prédéterminé.

5. Procédé selon l'une des revendications précédentes, dans lequel la grandeur de mesure détectée est la tension aux bornes d'une résistance de mesure (18) traversée par le courant.

6. Procédé selon l'une des revendications précédentes, dans lequel les instants sont répartis uniformément à l'intérieur d'une période de la modulation de la largeur des impulsions.

# Fig. 1

# Fig. 2

60 — Start

62 — Genug Messwerte erfasst ?

J → Mittelwert aus Summe der Messwerte berechnen — 74

N

64 — Aktueller Messwert < Offset ?

N → Messwertvariable = aktueller Mess-wert - Offset — 68

J

66 — Messwertvariable = 0

Mittelwert von Spannung in Strom wandeln — 76

70 — Messwertvariablen summieren

Mittelwert-berechnung zurücksetzen — 78

72 — Messwertezähler erhöhen

80 — Ende

# Fig. 3

```
                    ┌──────────┐
                    │  Start   │────  82
                    └──────────┘
                          │
                          ▼
                     ╱────────╲
                    ╱  PWM-    ╲──── 84
              N    ╱ Steuerung in╲
           ┌──────╲  Ruhezustand ╱
           │        ╲    ?     ╱
           │          ╲──────╱
           │              │ J
           │              ▼
           │         ╱────────╲
           │        ╱ Aktueller ╲──── 86
           │       ╱  Messwert <  ╲    N
           │       ╲   erlaubter   ╱─────────┐
           │        ╲   Offset ?  ╱          │
           │          ╲────────╱             │
           │              │ J                │
           │              ▼                  ▼
           │      ┌──────────────┐   ┌──────────────┐
      88 ──│──────│  Fehlersignal │   │  Fehlersignal │──── 92
           │      │ zurücksetzen  │   │    setzen     │
           │      └──────────────┘   └──────────────┘
           │              │                  │
           │              ▼                  │
           │      ┌──────────────┐           │
           │      │ Offset - Wert │──── 90    │
           │      │ aktualisieren │           │
           │      └──────────────┘           │
           │              │                  │
           └──────────────┼──────────────────┘
                          ▼
                    ┌──────────┐
                    │   Ende   │──── 94
                    └──────────┘
```

# Fig. 4

```
                    ┌─────────────┐
                    │    Start    │─── 96
                    └──────┬──────┘
                           │
                           ▼
              ╱─────────────────────╲
         N   ╱      Frequenz-        ╲ ─── 98
        ◄───┤   änderungssignal      ├
             ╲      gesetzt ?        ╱
              ╲─────────┬───────────╱
        │                │
        │               J│
        │                ▼
        │      ┌──────────────────┐
        │      │   Mittelwert-    │
        │      │   berechnung     │─── 100
        │      │   zurücksetzen   │
        │      └─────────┬────────┘
        │                │
        │                ▼
        │      ┌──────────────────┐
        │      │    Frequenz-     │
        │      │ änderungssignal  │─── 102
        │      │  zurücksetzen    │
        │      └─────────┬────────┘
        │                │
        └───────────────►│
                         ▼
                  ┌─────────────┐
                  │    Ende     │─── 104
                  └─────────────┘
```

# Fig. 5

```
        ┌─────────────────────────┐
        │          Start          │────── 106
        └─────────────────────────┘
                     │
                     ▼
        ┌─────────────────────────┐
        │       Neue PWM-         │
        │   Frequenz aktivieren   │────── 108
        └─────────────────────────┘
                     │
                     ▼
        ┌─────────────────────────┐
        │ Soll-Anzahl der Messwerte│
        │ für Mittelwertberechnung│────── 110
        │        berechnen        │
        └─────────────────────────┘
                     │
                     ▼
        ┌─────────────────────────┐
        │    Frequenzänderungs-   │
        │       signal setzen     │────── 112
        └─────────────────────────┘
                     │
                     ▼
        ┌─────────────────────────┐
        │          Ende           │────── 114
        └─────────────────────────┘
```

**EP 1 711 391 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003219690 A

- JP 3143294 A